(19) Europäisches Patentamt
European Patent Office
Office européen des brevets

(11) **EP 1 016 252 B1**

(12) **EUROPEAN PATENT SPECIFICATION**

(45) Date of publication and mention
of the grant of the patent:
**28.07.2010   Bulletin 2010/30**

(51) Int Cl.:
***H04L 29/00*** (2006.01)

(21) Application number: **98942935.2**

(22) Date of filing: **16.09.1998**

(86) International application number:
**PCT/GB1998/002806**

(87) International publication number:
**WO 1999/014915 (25.03.1999 Gazette 1999/12)**

(54) **PROCESS SCHEDULING IN COMPUTER NETWORK**

PROZESSVERWALTUNSSYSTEM IN EINEM COMPUTERNETZWERK

ORDINATEUR

(84) Designated Contracting States:
**DE ES FR GB IE IT NL**

(30) Priority: **17.09.1997   EP 97307224**
       **22.10.1997   EP 97308409**

(43) Date of publication of application:
**05.07.2000   Bulletin 2000/27**

(73) Proprietor: **BRITISH TELECOMMUNICATIONS
public limited company
London
EC1A 7AJ (GB)**

(72) Inventor: **COTTER, David
Suffolk IP12 4JN (GB)**

(74) Representative: **Roberts, Simon Christopher et al
BT Group Legal
Intellectual Property Department
PP C5A. BT Centre
81 Newgate Street
London
EC1A 7AJ (GB)**

(56) References cited:
**WO-A-96/02876      WO-A-96/38795
WO-A-97/26725**

• **MOGUL J C: "THE CASE FOR PERSISTENT-
CONNECTION HTTP" COMPUTER
COMMUNICATIONS REVIEW, vol. 25, no. 4, 1
October 1995 (1995-10-01), pages 299-313,
XP000541665 ISSN: 0146-4833**

**Description**

The present invention relates to a computer, and in particular to a computer executing processes using data retrieved from a remote source via a communications network, and also to methods of operating the communications network.

Developments in the processing speeds of microprocessors, in networking technologies, and in internetworking protocols, have lead to increasing use of computers for applications involving retrieval of high bandwidth data via networks. As processing speeds increase still further, this trend is expected to continue. The use of broadband optical networks has been proposed to support such applications. The present applicant's copending applications EP 97307224.2 PCT/GB97/02160 WO97/05725 describe and claim examples of networks designed to provide bursty, high-bandwidth data transfer on demand and with very low latency. However, despite such developments, there has remained a fundamental mismatch between processor and network technologies which has prevented the potential benefits of increased processing power and correspondingly increased network bandwidths from being fully realised. The design of high speed computers has relied upon the computer being a localised, physically small entity, in which data is generally available within a small number of clock cycles. By contrast, external data sources connected via a network can only provide data to the processor after a delay which is long compared to the clock speed, and which varies according to the location of the source. Conventional strategies designed to maximise the speed of internal processing by the processor therefore fail when dealing with external, networked data sources.

WO 96/02876 discloses a system, apparatus and method for processing and delivering multimedia presentations.

According to a first aspect of the present invention, there is provided a method of operating a computer, including

    a) retrieving data from a remotely located source via a network,
    b) scheduling a process using the said data for execution at time dependent on the time delay for retrieving the said data, and
    c) subsequently executing the said process.

The term "computer" is used in this document broadly to denote any data processing system. It encompasses, for example, data processing devices embedded in larger systems, such as a processor in a telecommunications exchange, as well as dedicated computer systems such as a workstation. The term "network" encompasses, for example, optical communications networks, electronic networks and wireless networks. In the case of a wireless network, for example, the connection to the network will be intermittent in nature.

This aspect of the invention provides a way of operating a computer which allows efficient use of the processor's resources even when an operation requires data from a remote source. This is achieved by determining when data is expected to arrive from the remote source, scheduling one or more processes requiring that data accordingly, and in the mean time using the free processor resources for other processes. Conventionally, the network and the remote data source have been regarded as a "cloud" which sources the data after a long and unquantifiable delay, and accordingly no attempts have been made to schedule processes using data from such sources. The present inventor has realised that it is possible to determine the delay or latency of such a remote source and to schedule processes using that data, thereby maximising the efficiency with which the processor's resources are used.

The method may include transmitting a poll message from the computer to the remotely located source, and in step (c) scheduling the said process relative to the time of transmission of the poll message. In this case the method preferably includes a step, prior to the transmission of the said poll message, of transmitting a call from the computer to the said remotely located source, in use, the remotely located source, in response to the said call, readying data for prompt transmission to the computer in response to the subsequent poll message.

In a preferred implementation, the computer first transmits an initial request for information (the "call") and subsequently transmits a second request (the "poll") to trigger transmission of the requested information. The transmission of a poll may follow the call after a delay which is sufficiently long for the computer to be certain that the data will be available at the remote source. Preferably however the method includes receiving at the computer an initial response transmitted by the remotely located source prior to the transmission of the said data, the said initial response including data availability timing data for use by the computer in scheduling the said process. This initial response or "contract" indicates when the requested data is expected to be available. Then, since the transmission path from the calling computer to the remote data source is fixed, with no buffers, queues or other delay mechanisms within the network, the time taken to respond to the poll is fixed and predictable, and processes requiring the returned data can be scheduled accordingly.

Preferably the initial response includes a parameter indicating the quantity of data which is subsequently to be received at the computer in step (e).

Providing information on the amount of data to be returned aids the computer in allocating resources. It is also particularly advantageous to have this information when communication between the computer and the remotely located source is carried out over a looped transmission path. The method may then include

i) transmitting a signal from the computer to the remotely located source on the looped signal path; and

ii) returning a signal from the remotely located source to the computer in the time slot on the looped signal path occupied by the said signal in step (i). In this case, preferably the computer transmits to the remotely located source a signal including a payload which is equal to or greater than the quantity indicated by the initial response parameter, and the remotely located source returns the said data in the time slot occupied by the said payload.

This preferred feature of the invention uses on-the-fly signalling as described and claimed in the present applicant's copending application, EP 97307224.2. The looped transmission path may be, for example, a selected one of a number of directed trails as described and claimed in the present applicant's copending international patent application PCT/GB97/02160.

Preferably the step of scheduling the process is carried out by an operating system, and more preferably by a multiprogramming operating system, running on the computer.

Although the step of scheduling the process may be implemented in a number of ways, for example in an application program or in middleware running on the computer, it is much preferred the step should be integrated within the computer operating system so that its benefits are transparently available to all higher level systems. Multiprogramming operating systems have been developed to maximise the efficiency with which a microprocessor, or a system of multiple parallel microprocessors, operates. The present invention is particularly advantageous when used in this context, since the scheduling algorithms applied to other processes can then be applied also to network-related processes.

According to a second aspect of the present invention, there is provided a computer comprising:

a) a data processing system
b) a network interface connected to the data processing system; and
c) a scheduling device connected to the data processing system and arranged to schedule the execution by the processing system of processes using data received from a remote data source via the network interface.

According to a third aspect of the present invention, there is provided a method of operating a computer connected to a network, the method including a)initiating an operation involving receiving data via the network from a remotely located source;

b) determining an expected time for receipt of data from the said source;
c) scheduling for execution by the computer at or after the expected time a process forming part of the said operation and requiring the said data;
d) pending receipt of the said data, executing other process on the computer;
e) receiving the said data; and
f) processing the said data.

According to a fourth aspect of the present invention, there is provided a method of operating a communications network comprising:

a) communicating packets of data between a data source and a data sink via a connectionless packet network;
b) subsequently establishing a circuit connection between the data source and data sink; and
c) communicating further data between the data source and the data sink via the circuit connection.

This aspect of the invention is advantageously combined with the preceding aspects, but may also be used more generally to provide a method which adapts the mode of transmission to best suit the nature of a particular transaction, connectionless operation giving the high speed and minimal processing overheads needed for efficient handling, e.g. of short search queries and responses, together with circuit-connected operation to give the guaranteed quality of service needed, e.g., to download a large file identified by the search.

Systems embodying the present invention will now be described in further detail, by way of example only, and will be contrasted with the prior art, with reference to the accompanying drawings, in which:

Figure 1 is a block diagram showing the structure of a computer embodying the invention;
Figure 2 is a distance-time diagram showing the operation of the computer of Figure 1 when connected to a packet network;
Figure 3 is a distance-time diagram for a computer embodying the present invention;

Figure 4 is a distance-time diagram for a second example of a computer embodying the present invention;
Figure 5 is a diagram showing a unidirectional ring network;
Figure 6 is a diagram showing a network using bi-directional links;
Figure 7 is a diagram showing a network using a Manhattan-Street Network (MSN) topology;
Figure 8 is a diagram showing a Torus network;
Figure 9 is a diagram showing a network node for use with the computer of Figure 1;
Figure 10 is a diagram showing scheduling in a conventional computer;
Figure 11 is a diagram showing scheduling in a computer embodying the invention;
Figure 12 is a diagram showing an operating system in a computer embodying the invention.

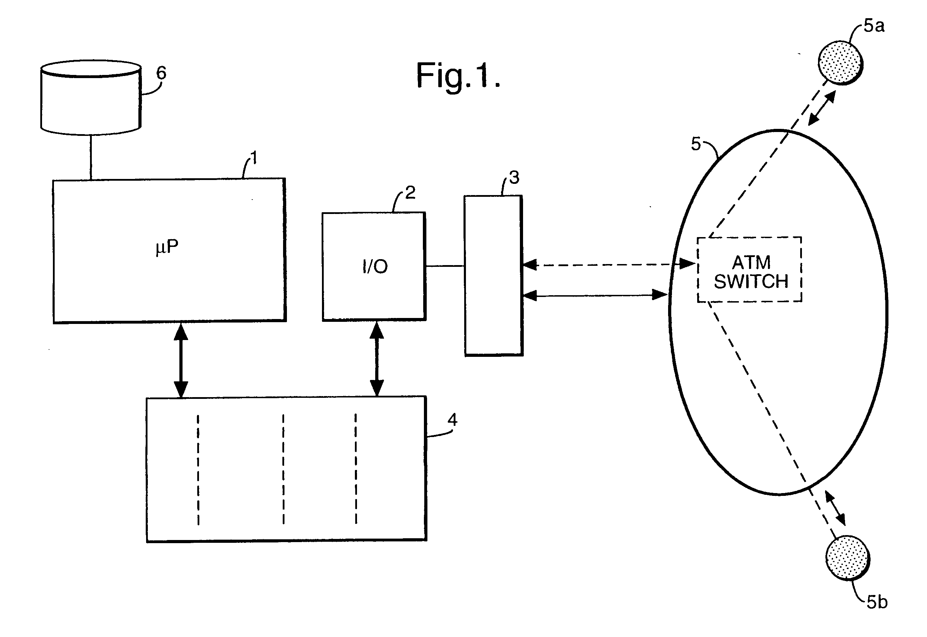

As shown in Figure 1, a computer comprises a microprocessor 1 and an input/output co-processor 2. A network interface 3 is connected to the input/output co-processor. Both the microprocessor and the input/output co-processor have direct access to a random access memory (RAM) 4. The network interface is connected to a network 5, which in the present examples is a photonic packet network. A hard disk 6 is connected to the microprocessor. As is further described below, data is retrieved across the network from remote data sources 5A, 5B. Incoming data is written by the input/output co-processor to the RAM 4.

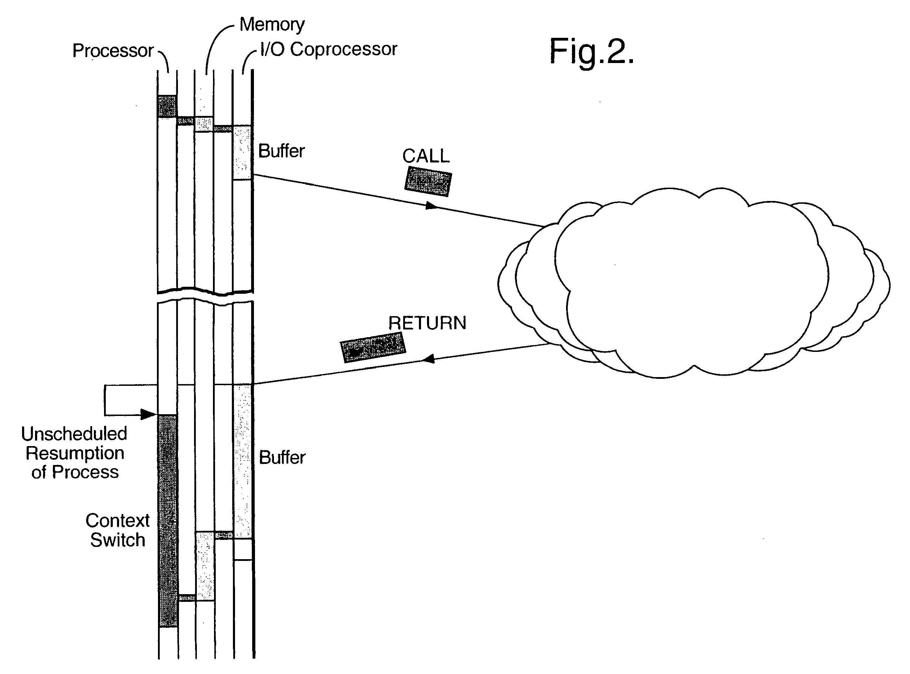

Figure 2 illustrates the conventional operation of a computer, such as that described above, when connected to a packet network. The computer employs multiprogramming. The operating system of the microprocessor loads several independent processes into memory. The memory is partitioned to accommodate the different processes. The partitions may be fixed or of variable size. Virtual memory, using storage on the hard disk, is used to keep a process going if the associated partition is too small. When one process is waiting for service from another device, for example when waiting for data to be input, then the microprocessor stores the current state of the one process and switches to another. This is termed a context switch. By switching between concurrent processes in this way, the microprocessor reduces its idle time and so increases its effective speed of operation.

In the example of Figure 2 a first process, shown by a dark shaded region, is running on the microprocessor 1. This first process generates a request for information ("call") from a remote data source on a connectionless photonic packet network 5'. The call passes from the microprocessor 1 via the RAM 4 to the I/O co-processor. The call is held in a buffer by the I/O co-processor until a time slot is available on the network for transmission of the call. From the point of view of the computer, the network and the remote data source together form a cloud in which the delays are unknown. The call will elicit a response ("return") but only after an unquantifiable delay. Because this delay is unknown, the best that the microprocessor can do is to hold the first process in a waiting state until the requested information arrives. The computer is unable to preschedule the resumption of the process, or to co-ordinate in time the process with other related processes, because the time of arrival of the required information is unknown. It is likely to have to make an unscheduled context switch, that is to say it will have to halt another process running while the first process was in the waiting state, when the return is received. Such context switches are costly in processing time and reduce the efficiency of the computer.

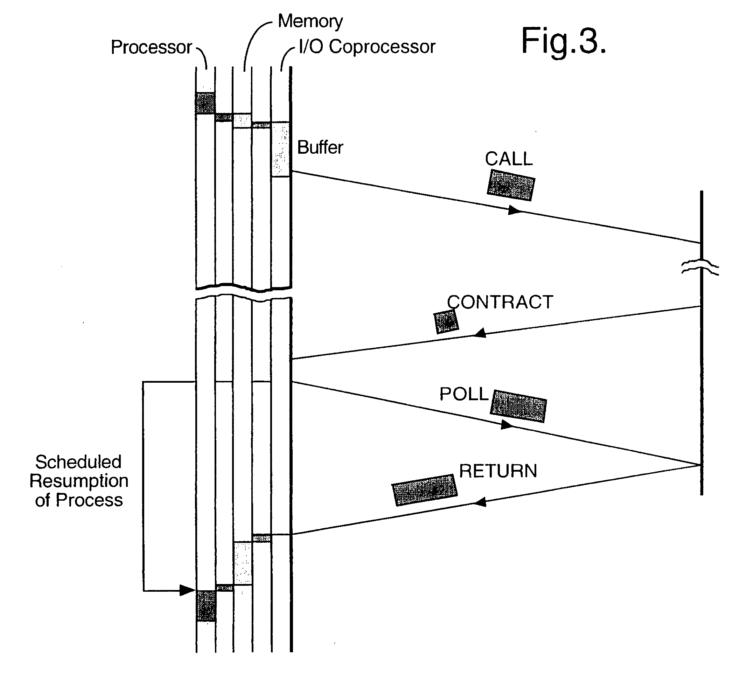

Figure 3 illustrates the operation of a system embodying the invention. This differs from the system of Figure 2 in that the computer is arranged to quantify the delays involved in obtaining data from the remote source, and uses knowledge of the delays to schedule the operation of all concurrent network intensive processes so that they operate together efficiently, rather than with random delays and in random sequences. This reduces the frequent context switches and cache misses which would otherwise occur. This allows "just-in-time" scheduling of processes and resources on the computer. To facilitate the task of the computer in quantifying delays, the network topology and the structure and operation of the network nodes are chosen so that there is a fixed looped continuous path between the computer and a given remote data source, with no internal buffers queues or other delay mechanisms within the network. Examples of such networks will be described in further detail below.

As shown in the distance-time diagram of Figure 3, a call from the computer now elicits a contract response from the remote data source. The time of arrival of the contract cannot be previously known by the computer, because even though the transmission delay across the network is now well quantified, there is an unknown time delay during which the remote data source processes the call, prepares the contract and transmits it. It may be assumed that the time required for the relatively simple tasks of processing the call and preparing the contract and transmitting the contract is small compared to the time required to prepare and transmit the true return containing the requested data. This latter operation may involve retrieving information from memory or file storage devices or even from some further distant information site, and some processing of that information. The contract informs the calling computer that the information required will be available on instant demand by calling the computer again after a certain time, which time the remote data source may specify. The contract in this example also specifies the network resources (e.g. the number of payload bytes) needed to transfer the information.

At an appropriate later time, which may take into account the known network delay -i.e. it may precede the time specified by the remote data source by a time equal to the time taken for traversing the network from the computer to the remote data source - , the computer transmits a poll signal to the remote data source. In the present example this task is performed by the input/output co-processor, independently of the main processor. The precise time of transmission of the poll is not known in advance, since the input/output co-processor may have to wait for a vacant packet time slot, or for other network resources, to become available. During this waiting time, the poll sits in an output buffer which is managed by the input/output co-processor. When the network resources become available, the poll is transmitted and the precise time of transmission is recorded by the co-processor and is passed to the process scheduler. The operation of the process scheduler is described in further detail below. Since the transmission path from the calling computer to the remote data source is fixed, with no buffers, queues or other delay mechanisms within the network, the propagation delay across the network can be determined. The poll in this example consists of a stream of packets with a combined empty (or replaceable) payload equal to or greater than the size specified in the contract. On arrival at the remote data source, the poll packets are filled using the on-the-fly signalling technique which is described and claimed in our co-pending application EP 97307224.2. The return data, which is by then available and waiting in an output buffer, is written into the time slots occupied by the poll packets and returns to the computer. In this way, it is ensured that the remote data source does not need to wait for network resources to become available before making its return, because the poll signal has already reserved the required resources. The return data subsequently arrives at the computer at a time which is known in advance by the process scheduler. The process scheduler uses this knowledge to execute processes in a sequence and time schedule which makes optimum use of the processor resources. For example, a second process is executed while the first process waits for return data. The second process may be selected e.g. using the criteria that it is sufficiently short to be completed before the arrival of the return data and that it is does not need as an input a value returned by the first process. A third process, which takes as inputs values returned by the first and second processes, may be scheduled for execution at a predetermined time after the expected arrival of the data from the remote data source, in order to ensure that the third process can be executed without further waiting.

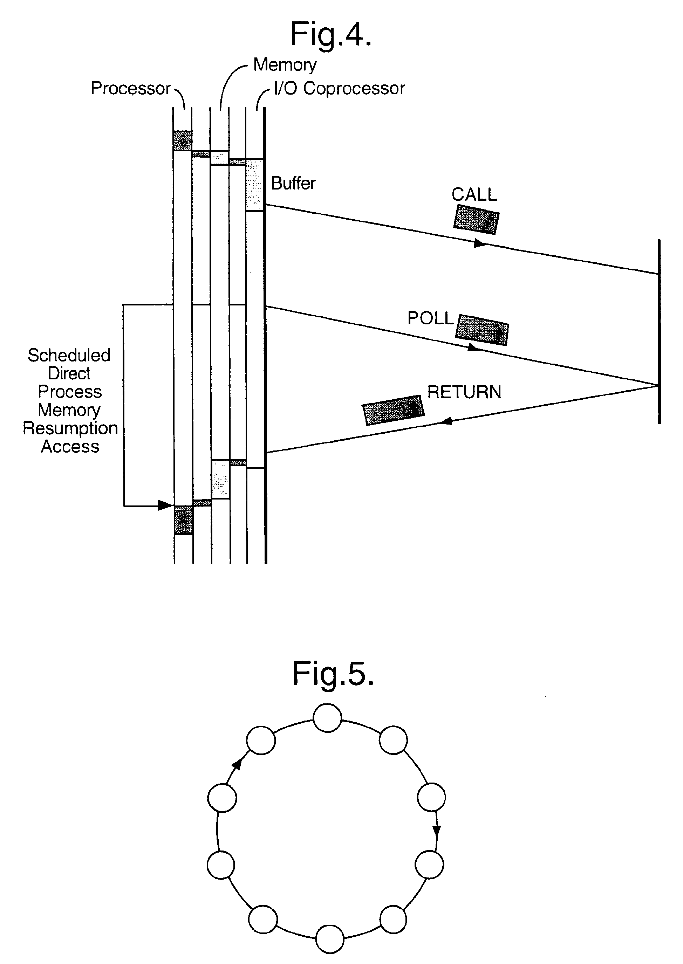

Figure 4 shows an alternative embodiment, in which the processing time at the remote data source is previously known by the calling computer, or the calling computer is able to allow sufficient time for the information to be available at the distant site with good probability. In this case, the contract stage is omitted. The calling computer polls the remote data source at an appropriate time and receives the return at a prescheduled time as in the first example above.

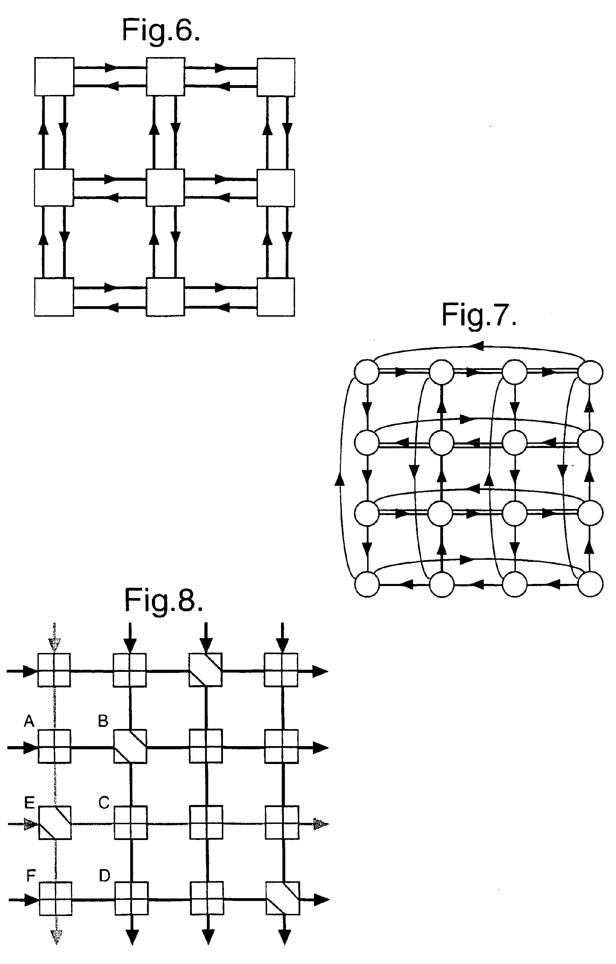

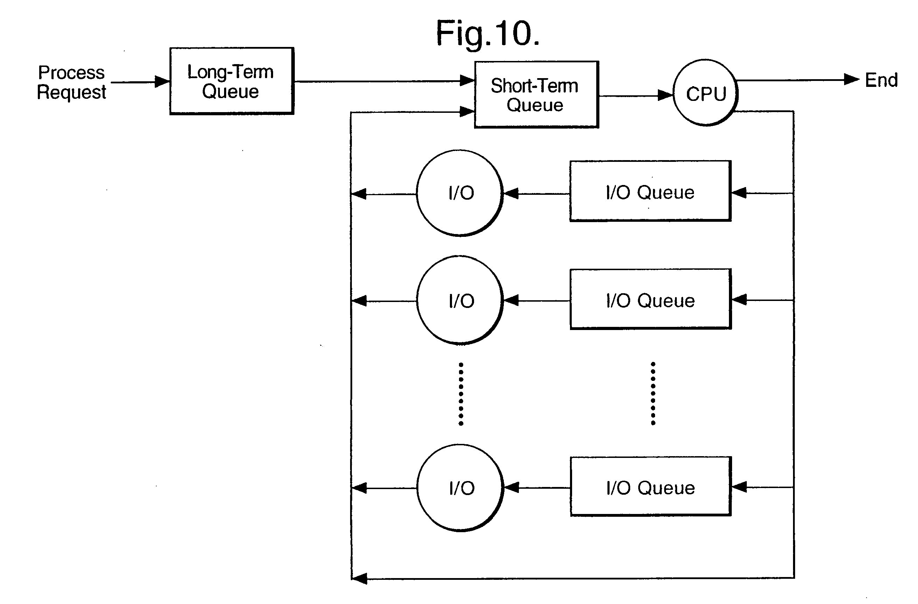

In the present examples, the scheduler is integrated with the operating system of the microprocessor. The microprocessor employs the technique known as multiprogramming. As described in "Computer Organization and Architecture", Fourth Edition, W Stallings, Prentice-Hall, 1996 Figure 7-10, page 236, process scheduling allows a number of concurrent processes to make use of the microprocessor. Each process generates a corresponding request which is placed in a long-term queue. As resources become available, a process is placed in the ready state and is placed in a short-term queue. The processor alternates between executing operating system instructions and executing user processes. While the operating system is in control of the microprocessor it decides which process in the short-term queue should be executed next. When the operating system has finished its immediate tasks, it turns the processor over to the chosen process. The short term scheduler, also known as the dispatcher, is that part of the operating system which is responsible for deciding which process in the short-term queue should be executed next. A process which is being executed may be suspended for example because it requests I/O (input or output) or because the operating system needs to regain use of the microprocessor. When the cause of the suspension is of this latter sort, then the process is placed in the ready state and is placed back in the short term queue. Conventionally, however, when the suspension relates to an I/O request, then the process has been placed in an I/O queue and has been returned to the short-term queue only at an indeterminate later time at which the I/O process has been completed. This conventional approach is illustrated in Figure 10.

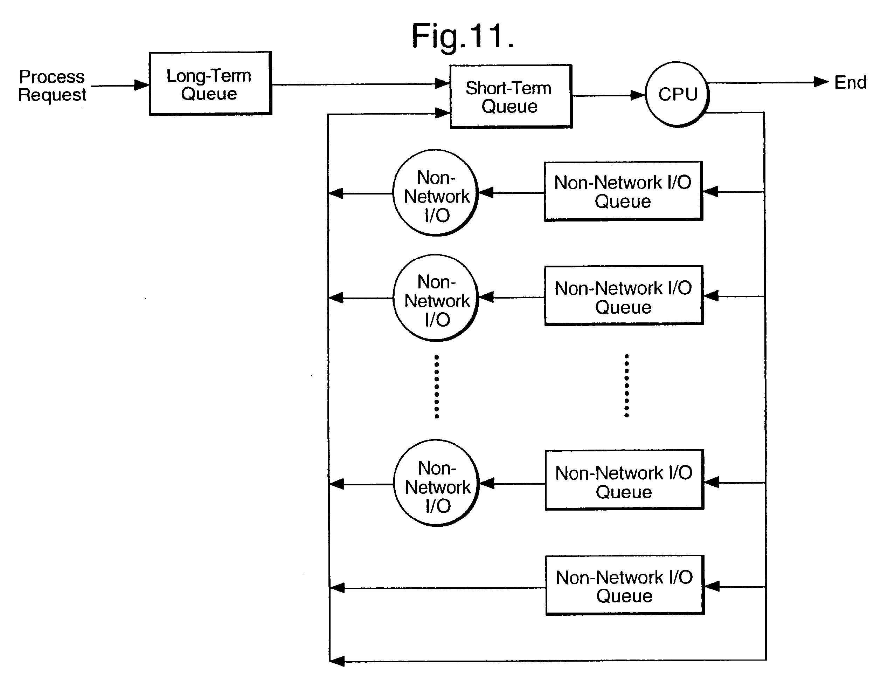

As illustrated in Figure 11, in a system embodying the invention the operating system handles differently non-network I/O (for example, I/O with computer peripheral devices) and network I/O. An executing process that requests network I/O is suspended and placed in the network I/O queue. Subsequently, at a time which depends on the priority of the process and upon the availability of the necessary network resource, a message is transmitted into the network. Then, rather than the process remaining in a waiting state of indeterminate duration until the required information is received from the network (as in Figure10), the process is returned immediately to the short-term queue. Each process is represented to the operating system by a 'process control block' which typically contains: a unique process identifier; state (the current state of the process - new, ready, and so on); priority; program counter; memory pointers; context data; I/O status information (including outstanding I/O requests, I/O devices assigned to the process, etc.); and accounting information. In addition, the process control block includes a field for the process-ready time. This is set, for example, using data from a "contract" returned by a remote data source, to indicate the expected delivery time of the requested data. The dispatcher then selects processes from the short-term queue for execution depending on their process-ready times and priorities. The operating system and the user program may modify process priorities dynamically so that all concurrent network-intensive processes operate together efficiently. For example, priorities of different processes may be set so as to minimise the number of context switches.

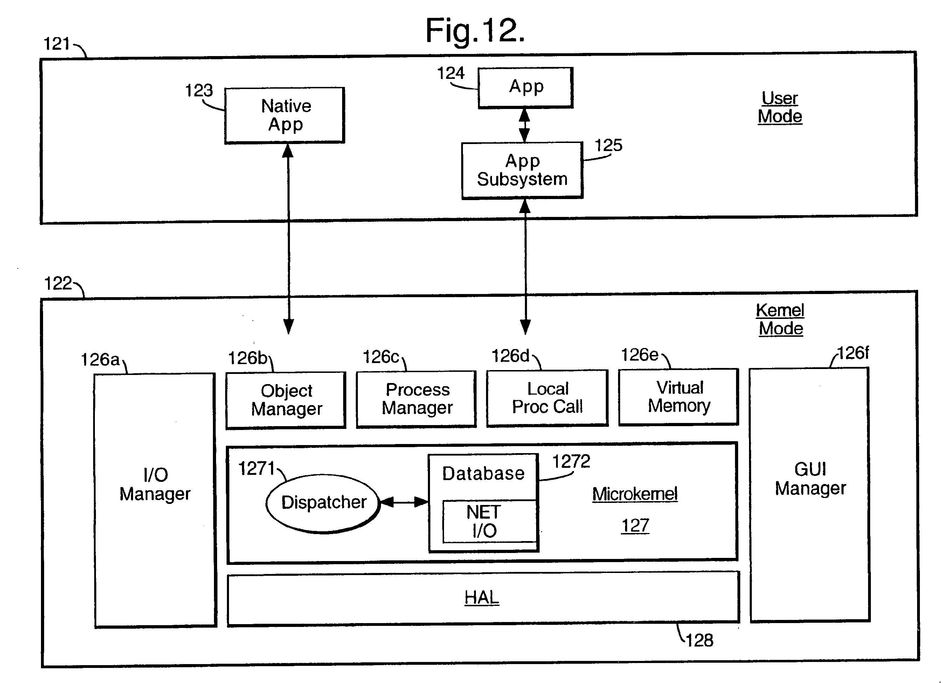

Figure 12 shows an overview of an operating system embodying the present invention. The operating system in this case is a Windows NT-like system using a microkernel architecture (Windows NT is a trademark of Microsoft Corporation). The operating system comprises a user mode 121 and a kernel mode 122. A native application 123 (such as a Win32 application in the Windows NT environment) communicates directly with the kernel mode 122. Another application 124 (e.g. an OS/2 application in a Windows NT environment) communicates with the kernel mode 122 via an application subsystem 125 which supports the relevant API (application programmer's interface). The kernel mode includes a number of executive services 126a-126f. These executive services include an I/O manager, object manager, process manager, local procedure call facility, virtual memory manager, and GUI manager. A microkernel 127 is interfaced to the hardware of the computing system via a hardware abstraction layer (HAL) 128. The microkernel 127 schedules threads for execution, transfers control to handler routines when interrupts and exceptions occur, performs low level multiprocessor synchronization, and implements system recovery features after power failure. Particularly relevant to the present invention, the microkernel includes a dispatcher object 1271 which carries out thread scheduling and is responsible for context switches. A dispatcher database 1272 is associated with the dispatcher object 1271. The dispatcher database 1272 keeps track of which threads are waiting to execute and which processors are executing which threads. This is done using a queuing mechanism which incorporates a queue for network input/output requests. As described above with reference to Figure 11, a process-ready time is recorded for these requests, and the corresponding thread is then returned to a short term queue.

The hardware which runs the operating system may include a single microprocessor, such as an Intel Pentium (TRADEMARK) microprocessor, or may include multiple microprocessors operating in parallel.

In systems embodying the present invention, a number of different approaches to determining the round-trip delay time are possible. One such is the use of a look-up table. The table may be compiled in an initialisation phase by the computer sending a test signal to every data source in the network and recording the time delay associated with each data source. Subsequently, this table is referred to by the scheduler when needed.

As an alternative to the use of a look-up table, delay measurement may be incorporated in the signalling procedures each time before a poll signal is transmitted. This avoids the overheads associated with maintaining a look-up table, and ensures that any changes in the delay values, caused e.g. by changes in cabling or routing due to equipment failures, maintenance or reorganisation, are taken account of. In one implementation of this approach, the computer determines the time of flight of the call packet from the computer to the remote data source, determines the time of flight for the contract packet from the destination back to the source, and adds these two flight times together to find the round-trip delay. In general these two flight times are different because packets sent from the computer to the data source follow a different path from packets sent from destination to source. To aid the determination of time of flight, the contract packet contains two additional items of information: the time of arrival of the call packet and the time of transmission of the contract packet. Using this information together with the time of arrival of the contract packet, the computer is then able to make the required determination. For this approach to be possible however, the computer and data sources must have accurately synchronised clocks. In an alternative and preferred approach to delay measurement, the computer measures the delay in a single stage without reference to any clock other than its own. This is achieved using on-the-fly signalling to return an acknowledgement signal to the computer. The computer records the time of transmission of a call packet. If the destination, that is the remote data source, successfully receives the call packet it acknowledges this by sending an "ACK" packet back to the computer in the time slot originally occupied by the call packet. The source records the time of arrival of the ACK packet. The difference between the time of transmission of the call packet and the arrival of the ACK packet is then equal to the round-trip propagation delay between the computer and the destination. Networks, network interfaces and packet routing methods suitable for use in implementing the invention will now be described in further detail.

The networks described here provide a continuous, unidirectional transmission path leading from a source, such as the computer in the examples described above, to a destination, such as a remote data site, and back again to the source. A simple example of this is the unidirectional ring network shown in Figure 5. Another example, shown in Figure 6, is a network containing bi-directional links. A third example, shown in Figure 7, is a Manhattan-Street network using the 'trail routing' technique described in the present applicant's International Patent Application, also entitled "Communications Network", Agent's reference A25265/WO. Protocols suitable for use on such networks are described in detail below. In these examples it is assumed here that equipment failures are rare occurrences, which are detected and remedied by higher-layer protocols. The routing protocol described here is concerned with providing ultra-low latency signalling in the normal case, where such failures do not occur. It is also assumed that a transmitted message consists of a single packet or a string of packets, and that the packets are inserted into fixed-length time slots each of which can contain at most one packet.

In the protocol described here, when a source node wishes to start transmitting a message to a destination node it must wait until there is vacant capacity on the transmission path (i.e. in a slotted system, until there is at least one free time slot). When the destination node receives the message and wishes to return an acknowledgement or similar signal to the source, it does this by transmitting the signal in all or part of the time period occupied by the original message (i.e. in a slotted system, by using one or more of the time slots used by the source to transmit the original message). This has the advantage that the destination node does not need to wait until there is further vacant capacity on the transmission path before the packet can be sent, because it is immediately reusing a time slot already reserved by the source. This ensures that the signal is transmitted by the original message destination and received by the original message source in the shortest possible time, limited by the transmission time of flight at the speed of light. The destination node does not need to wait until there is further vacant capacity on the transmission path before the signal can be sent. By a suitable choice of protocol and packet format, the signal returned from the destination node to the original source can consist of one or more of the original message packets ( optionally with some modification, such as a changed flag, or even with no modification at all). Then the processing required by the destination node to generate the acknowledgement is primitive and minimal. In this way the destination node can make its signalling decisions at high speed whilst the packet is 'on the fly', without the need for buffering.

A further aspect of the protocol is that the round-trip time-of-flight of a packet from a source to destination and back again can be accurately known, since it corresponds to a physical distance only. Therefore at the instant when a source transmits a packet it knows precisely when to expect a response. The source may use the time of arrival of a signal packet to identify the message and destination with which it is associated. Also, if a signal fails to arrive at the expected time, the source can interpret this absence of a signal in various ways (for example, as illustrated below, to indicate that a message failed to reach its intended destination).

'Courteous' protocol

This protocol is termed "courteous" since packets are not discarded whilst en route to their destinations. Once a string of packets has been transmitted by the source its arrival at the destination is guaranteed (at least at the level considered by the protocol, since we neglect here the rare occurrence of equipment failure). Contention does not occur within the network; contention resolution is performed only at the edge of the network by the transmitting nodes (by using only vacant time slots). In this case, when a node N is transmitting on a given channel and a foreign string of packets, not addressed to N, arrives on the same channel, the node N must cease transmission and allow the foreign string to proceed uninterrupted. There are two strategies that can then be adopted to deal with this occurrence. In the first strategy, node N will restart the transmission of its string from the beginning again as soon as a vacant time slot becomes available. In the second strategy, node N will restart the transmission of its string from the point at which it was interrupted as soon as a vacant time slot becomes available. In that case the packet should contain a further flag COS (continuation of string). Optionally, a maximum length of any string of packets may be specified, to prevent a node from capturing unfairly the network resources. When the destination node begins to receive a string of packets it immediately acknowledges this by sending a signal back to the source. In the courteous protocol, the arrival of the string is guaranteed. Nevertheless the destination node needs to signal to the source that it is ready and has the resources available to receive the message. If the destination node is not able to receive the message, the source should be informed as soon as possible to cease transmission. If the destination node wishes to send an acknowledgement signal to the source indicating that it has the resources available to receive the message, it may do this by allowing the first packet in the string, identified by setting a "Start of String" flag SOS = 1, to continue along its path back to the source. This packet is unmodified by the destination node, and it continues onwards back to the source node where it functions as an acknowledgement signal. The destination node must remove all other parts of the string from the network (except, as described below, the last packet in the string). The source that originated the string recognises that the acknowledgement signal is directed to itself because it sees its own address as the source address in the packet. If the acknowledgement signal is not received by the source at a time equal to the round-trip propagation time of the transmission path from the source back to the source via the destination, then the source may assume the destination node is not able to receive the message, and so the source will know it should immediately cease transmission.

A further acknowledgement is sent by the destination node back to the string source to indicate that the whole string of packets has been delivered successfully. Examples of reasons for unsuccessful delivery are transmission errors and overflow of the receiver buffer. Again, assuming the string is deemed to have been delivered successfully, the second acknowledgement can be made by allowing the final packet in the string, identified by setting an "End of String" flag EOS = 1, to continue along its path back to the source. This packet is unmodified by the destination node and it continues onwards back to the source node as an acknowledgement signal. Again, if the second acknowledgement signal is not received by the source at the expected time, then the source may assume the string delivery was unsuccessful, and so will know it should immediately retransmit the string of packets.

The 'courteous' protocol rules for the action of any node (address N) in response to an incoming packet P are as follows.

```
if destination address of P = N then
 {incoming string received}
 if node N has the resources available to receive the incoming
 string then
```

```
begin
      pass contents of P to receiver buffer;
      if (SOS = 1 in P) or (EOS = 1 in P and message received
error-free) then
            allow P to continue along path
            else remove P from network;
end
else remove P from network;
if source address of P = N then
{acknowledgement signal received}
begin
      pass contents of P to signalling receiver buffer;
      remove P from network;
end;
if (node N is transmitting) then
{be courteous}
begin
      allow P to continue along path;
      either {depending on strategy used}
      recommence transmission (with SOS = 1 in first packet)
when free time slot obtained
      or
      continue transmission (with COS = 1 in first packet) when
free time slot obtained;
end.
```

The protocols described in the above examples may be used with a variety of different packet routing methods, and in networks of different topologies. In the present examples however a directed trail routing method is used. This takes advantage of the fact that a network having a topology of the type exemplified below, can be divided into a set of distinct trails, such that no one single trail spans all of the network, but there is always one trail which leads from a given source node to a given destination node. Routing can then be carried out simply by selecting the appropriate trail linking a source node to the desired destination node. Once on the trail, the packet can be routed in a quasi-one-dimensional fashion. As in one-dimensional routing the source node selects the entire trail from the source to the destination before sending the packet. It is found that a particularly effective way of routing a packet along a trail formed from a number of directed cycles is to switch the optical output of the intermediate nodes at prescheduled times e.g. with a fixed periodicity, so as to connect one cycle to another cycle. The source node then determines the trail followed by the packet by outputting the packet at a time determined in relation to the switching schedule so that, at a desired node, it is switched from one cycle to the next cycle in the trail. Preferably the switching occurs at a point of connection between cycles from a link-disjoint directed-cycle decomposition of the network. Preferably the nodes switch in synchronism throughout the network between pre-scheduled predetermined switching states. In the present example, a crossbar switch is associated with each node. All the crossbar switches are normally set to the cross state and repeatedly, at predetermined intervals, the crossbar switches are set to the bar state. The switching operations that maintain a packet on its selected trail leading from its source to its destination can operate in an automatic fashion, without requiring the intermediate nodes to interrogate the packet destination address or to perform any intelligent route selection. The network operates in a slotted fashion with packets constrained to some maximum length, i.e. time is divided into a regular time slots which are dimensioned to contain a packet of the maximum allowable size together with a guard band. The crossbar switches in all the routing nodes in the network are arranged to operate in a regular, coherent fashion, locked to a global network clock at the time-slot rate. When the switches change configuration they do so during the guard band so as not to corrupt packets. The packet time slots, each of length $T$, are arranged in frames of length $n$ time slots. In the first $n - 1$ time slots in a frame, the crossbar switches are all set in the cross position (denoted $c$ in the diagram); in the final time slot of the frame the switches are all set to the bar position (denoted $b$). The length of each link connecting a pair of adjacent nodes in the network is selected and controlled so that the signal group time-of-flight is equal to $(qn + 1 - \Delta)T$, where $q$ is any integer, and $\Delta$ is the phase difference between the clock signals at the two nodes, expressed as a fraction of the time slot period $T$. In other words, apart from the clock phase difference $\Delta T$, the length of every link in the network is equal to an arbitrary integer number of frames plus one time slot. Thus a packet which exits from a node in the $j$th time slot of a frame will arrive at the next node in the $(j+1)$th time slot of a frame. More generally, the packet may be advanced or retarded by a fixed integer number of time slots. The packet may be advanced/retarded by any fixed integer number of slots which is not a multiple of n, if n is odd, or by a number which is odd if n is even.

Figure 8 shows how a 4x4 torus network might appear to some of the packets travelling inside it. Suppose, in Figure 8, node *A* wishes to transmit a packet to node *D*. The source node *A* will use a look-up table or some other algorithm to determine that it should transmit the packet along the outward link in the horizontal cycle $C_{2h}$ using a vacant time slot in the third position in a frame (in this example each frame contains 4 slots). On arrival at the next node, *B,* the packet will find itself in the fourth (i.e. the last) slot in a frame, and therefore the crossbar switch at *B* will be configured in the bar position, as shown in Fig.8. The packet is therefore switched into the vertical cycle $C_{1v}$ and progresses onwards through node *C* (where it is now in the first time slot of a frame, so the switch at *C* is in the cross state), eventually reaching its destination node *D*. Not shown in Fig. 8 is an alternative routing; exiting from *A* along the vertical cycle $C_{0v}$ in the second time slot of a frame, via nodes *E* and *F*.

As indicated earlier, with directed-trail routing, the only processing operation connected with the routing that a network node is required to perform on incoming packets is simple: the destination address of every incoming packet is examined, and if it corresponds to the address of the node the packet is removed from the network, otherwise it is forwarded. The process of comparing the packet address and the node address is a simple single-word matching operation, and can be performed at high speed; for example, optical recognition of 6-bit address words has been demonstrated recently at a peak rate of 100 Gbit/s [Cotter, D., Lucek, J.K., Shabeer, M., Smith, K., Rogers, D.C., Nesset, D. and Gunning, P.: 'Self-Routing of 100 Gbit/s Packets Using 6-Bit 'Keyword' Address Recognition', Electronics Letters, 31, pp. 2201-2202 (1995)]. Since the directed-trail routing does not use an algorithm that relies on any particular sequential numbering system for the network nodes, the nodes can be labelled in an entirely arbitrary fashion. This can simplify the tasks of planning, administrating and evolving the network.

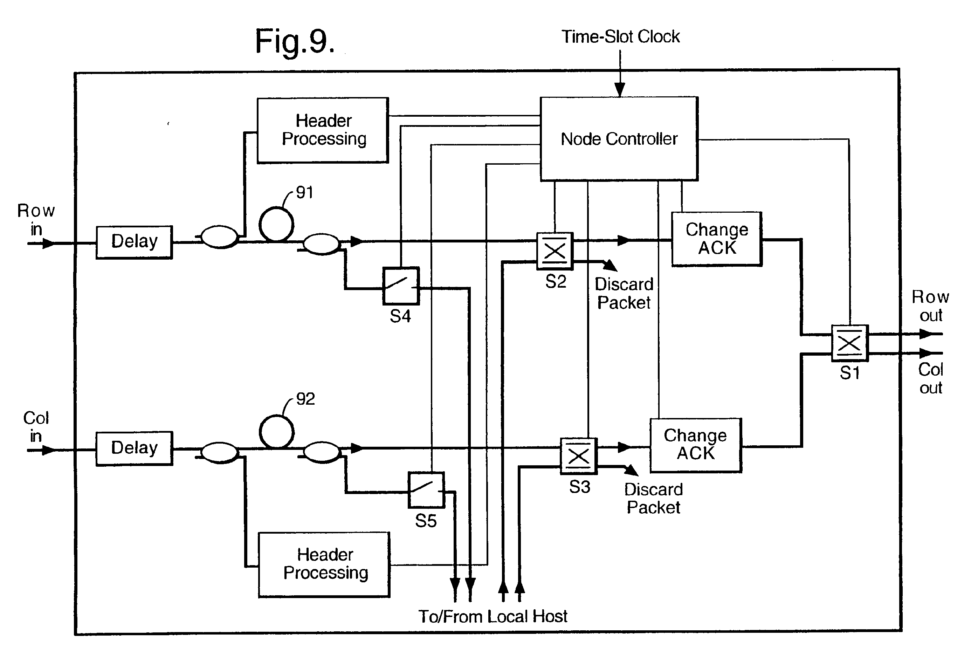

Figure 9 shows the elements of a network interface for a node, such as the computer described above, in a system using the just-in-time scheduling of the present invention in conjunction with on-the-fly signalling and the directed trail routing method. The Figure shows a 2-connected node suitable for interfacing the computer to the network of Figure 7. In a photonic network implementation, the heavy lines are optical fibre paths. The delay units at the two inputs to the node provide the necessary adjustment on the lengths of the two incoming links to satisfy the requirement described earlier, that on each link connecting a pair of nodes, the signal group time-of-flight along the link should be equal to ($qn$ + 1 - $\Delta$)$T,$ where $q$ is any integer, and $\Delta$ is the phase difference between the clock signals at the two nodes, expressed as a fraction of the time slot period $T$. By providing two delay lines (one on each input) with independent compensation for phase differences, it is also possible to ensure that the packets on the two incoming links are correctly synchronised relative to each other and to the time-slot clock at the node. Each delay unit could consist of a combination of: i) a length of fibre cut to a suitable length to provide coarse timing adjustment; ii) a step-adjustable delay line consisting of a chain of 2x2 space switches and fibre delays (such as described in reference [12]) to provide timing adjustment to within a few hundred picoseconds; and iii) a free-space adjustable optical delay line (such as optical delay line type ODL-300-15-SMF manufactured by Santec Corporation) to provide fine adjustment to within a few tens of picoseconds. It may be necessary also to compensate for slow drifts in the optical path length of the incoming links. These drifts may be caused by environmental factor acting on the fibre - for example, movement causing stretch, or temperature variations. This continuous environmental compensation can be achieved by detecting a variation in the relative timing of incoming packet arrivals and the time-slot clock at the node, and providing an electrical feedback control signal to the step-adjustable delay line and the free-space adjustable delay line units.

Further delay stages 91,92 for the optical signal are provided by coils of optical fibre which are connected in each input path between a first coupler which taps a signal for the header-processing unit and a second coupler which taps off a signal to optical space switches S4,S5. These further delay stages ensure that there is sufficient time for the header-processing unit to carry out the required processing before an optical packet reaches the output switches.

The header-processing units performs the following tasks: i) detects the presence or absence of a packet in a time slot; ii) detects the time of arrival of a packet; iii) determines whether or not an incoming packet is addressed to the node; and iv) reads header flags such as the ACK flag. For tasks i) and ii) it is sufficient to use a ⁻1 GHz-bandwidth photodetector to detect a fraction of the packet signal. The presence of a signal from this photodetector during the time slot indicates the presence of a packet. The phase relationship between the time-slot clock and the component of this photodetector signal which is at the time-slot rate can be detected using an electronic phase detection circuit, and a voltage proportional to this phase difference provides the control signal necessary for the feedback control circuit mentioned above. For task iii) it is necessary to compare the address in the packet header with the address of the node. For an ultrafast photonic implementation this can be performed using the method of ultrafast binary word recognition described in the present applicant's international patent application PCT/GB94/00397, with further technical details disclosed in WO 95/33324.

An experimental demonstration of this technique is described in the above-cited paper by Cotter et al. As described in the above-cited applications, address words for packets are selected from the subsets of binary words for which the following condition is true for any two words A, B in the subset:

A⊗B = 0 only if A=B,
and A⊗B = 1 otherwise,
where A⊗B is the Boolean operation

$$\sum_{i=1}^{n} a_i . \bar{b}_i .$$

Word recognition is then carried out using a simple AND operation between an address word from a packet and the complement of the node address. A suitable AND gate is a semiconductor optical amplifier supporting four-wave mixing (FWM).

This method of word recognition provides a binary output signal indicating whether or not the header destination address matches the node address.

The basic space-switching operation is performed by five crossbar switches. The use of five switches rather than only one firstly provides the additional signal paths needed to connect to and from a local host computer system, and secondly makes it possible for a node simultaneously to read a packet and to allow a packet to continue to travel on the looped signal path. Switches S2 and S3 provide the connections to the local host computer system and switches S4 and S5 allow a replica of an optical packet to be communicated to the local host while the original packet can continue via S2 (or S3) and S1 to an outgoing link. Suitable space switches capable of operation in a time of 1 ns or less are lithium niobate devices such as type Y-35-8772-02 supplied by GEC Advanced Components.

A node such as that described above can be used to insert a new packet from the local host at the destination node into a time slot already reserved by the source. In this example, this is done by switching S2 or S3 into the cross position. This may be done in order to transmit back an acknowledgement signal generated at the destination node, as an alternative to using part of the incoming signal as the acknowledgement signal. This mechanism may also be used to allow the source to schedule the delivery of data from the destination node back to the source, and hence also to schedule processes at the source which rely upon that data. The source and destination may initially communicate to establish a time after which the data is available, and the quantity of data. The source subsequently may transmit a pollling signal to the destination comprising a number of packets sufficient to contain the quantity of data. The destination node writes packets into the corresponding time slots, and the data subsequently arrives back at the source at a predetermined time after the transmission by the source of the number of packets.

An optical processing block is included in each of the input lines to routing switch S1. This block overwrites the ACK flag in a packet when necessary. The block may be implemented, for example, using an optical time-division add/drop multiplexer such as the photonic semiconductor integrated circuit device fabricated at the Heinrich-Hertz Institute ("Monolithically integrated asymmetric Mach-Zehnder interferometer as a robust add/drop multiplexer for OTDM systems", E. Jahn et al, Electronics Letters, vol. 32, pp. 216-217, 1996). This would be used in conjunction with a method for generating a suitable optical control signal to function as a synchronisation pulse, such as that described in International Patent Application No. WO 95/32568 filed 23rd May 1995 by the present applicants (BT Case no A24884).

The network may use a time slot clock at a rate of 155 MHz (6.45 ns period). This is a standard clock used currently in SDH networks and can be distributed over wide (national) geographical regions with timing jitter of less than 500 ps. The packet may consist of 53 bytes at 100 Gbit/s (4.24 ns duration). A suitable switch band for operation of the electro-optic space switches is 1 ns, and in addition there are two time guard bands each of size 0.6 ns. Within the node, the position of the current time slot in the frame can be tracked by an electronic modulo $n$ counter (for a frame $n$ time slots long) which counts the time-slot clock pulses. During the initial start-up phase of the network, and subsequently when time slots are available, one node in the network (designated a master node) can broadcast packets in one fixed position in the frame (such as the first position), so that the counters in other nodes can be reset to the correct phase in synchronism with the master node.

The space switches in the node are activated by the electronic switch controller unit shown in Figure 5 which acts on the basis of the following information: i) whether or not the position of the time slot in the frame corresponds to a 'cross' or 'bar' configuration in the directed-trail routing cycle (1 bit); ii) whether or not an incoming packet occupies the current time slot (1 bit per input port); iii) whether or not the destination address for an incoming packet matches the address of the node (1 bit per input port); iv) whether or not a packet that is waiting in the host's output buffer wishes to access an output port in the current time slot (1 bit per output port). On the basis of this information, (total 7 bits) the electronic switch controller unit sends electrical drive signals to the space switches in correct synchronism with the time guard bands between packets, and in this way performs the following tasks: i) routes incoming packets to the host or to one of the output ports; ii) routes packets from the host to one of the output ports if the required time slot is vacant. An example of the logic required to perform these tasks is as follows:

```
if not (current time slot is last position in frame )
        then
            S1 := cross;



if ( (incoming row time slot is occupied) and not (incoming
column time slot is occupied) and not ( incoming row packet is
addressed to host ) and ( a host packet is waiting to exit from
the row port in the current time slot ) and ( a host packet is
waiting to exit from the column port in the current time slot )
) { comment - destination address of vacant incoming column time
slot is not defined } then
begin
        S2 := cross;
        S3 := bar;
end.
```

The routing logic, of which this is an example, is sufficiently simple that it can be executed using hard wiring together with a fast 8-bit decoder chip, without the need for arithmetic, registers or look-up tables. It is purely a logical combination circuit, and therefore the decision time depends only on gate delays. The switch controller unit can therefore operate at high speed, suitable for routing packets in multi-Gbit/s networks. Similarly, the logic for the signalling protocols discussed above uses purely combinatorial logic and can be implemented in the same manner using hard wiring and a fast decoder chip.

In the node interface described above with reference to Figure 9, the further optical delay stages delay an optical packet for a time sufficient for header processing to be carried out. This structure may be used more generally in systems implementing on-the-fly signalling, such as those described and claimed in EP97307224.2 (BT ref A25482), as well as in systems embodying the present invention. In a further, alternative implementation of the invention, the remote data source incorporates such an interface in which the length of the further optical delay stages is increased. The processor at the data source then has time to process an incoming message and to carry out local data retrieval and processing before the incoming packet exits the interface. In this way the source is able to respond to a data request by overwriting on-the-fly the time slots occupied by the packets of the request with the response to the request. The data source latency is effectively reduced to zero, leaving only the time-of-flight delay associated with the signal path between the computer and the data source. The data source does not need to wait for new network resources to become available- it simply reuses the resources already reserved by the source of the original message.

In one possible implementation, a network incorporates 100 such nodes, each node has two network inputs, and processors associated with the nodes function at 100,000 MIPs. The frame length is 10 time slots and each time slot is large enough to hold a packet of around 50 bytes, such as an ATM cell. Concurrent messages at the node may be handled by several processors in parallel. It can be shown then that, in this case, a fibre length of around 240 metres is sufficient to give a time delay of 200 time slots. This allows 100 time slots for receiving a message and 100 time slots for preparing the response giving the or each dedicated processor, at 100,000 MIPS, time to execute 60,000 instructions. Provided that the processor has direct local access to the data required, and does not need to consult more distant data sources, 60,000 instructions may be sufficient to complete the response to the original request.

In such systems using an on-the-fly response, a two-stage protocol for communication between the computer and the data source, with the computer sending first a call and subsequently a poll, is no longer required. For an individual request, a call alone is sufficient, since it will illicit an immediate response. However, this makes it necessary for the computer to have determined previously the round-trip delay. Therefore, prior to the computer entering a dialogue with the remote data source in which a number of calls are sent, an initial message is sent and triggers an on-the-fly response which allows the round-trip delay to be measured. The measured delay is then used to determine the expected time of arrival of subsequent responses.

The computer may be programmed to choose between call-contract-poll signalling as described in the first example and on-the-fly signalling as described in the immediately preceding example, depending on the characteristics of the data involved in a particular transaction. The on-the-fly protocol is appropriate, for example during a search phase when a programme or agent on the computer is attempting to locate data and assess its relevance. In a later phase when previously selected data is presented it may be necessary to download a large file. Then the server has to reserve network resources for transmission of the file and the call-contract-poll signalling may be more appropriate. Alternatively, during this later phase of operation, the computer may switch from the connectionless on-the-fly protocol to a conventional connection-oriented protocol such as ATM (asynchronous transfer mode). ATM cells may be transmitted as packets on the same network as was used for the search phase. Alternatively a second network, indicated by dashed lines in Figure 1, dedicated to ATM traffic and interconnecting the different nodes may overlay the first network, and the network interfaces at the computer and at the remote data source may be arranged to switch data via the second network for the later phase of operation. This approach is not limited to use with just-in-time signalling, but may be used more generally to combine connectionless and circuit-connected communication between a node and a remote data source. In operation, the search phase may encompass, for example, transmission of a search request containing key words for searching from the computer to a search engine running at the remote data source, the returning of a list of documents fitting the search criteria, and the transmission from the computer to the remote data source of a signal indicating which of the list of documents are to be selected for retrieval. Then, in the later phase, the remote data source and the computer establish a circuit connection in a conventional fashion, and use that circuit connection for the downloading of the data file corresponding to the selected document.

**Claims**

1.   A method of operating a computer connected to a network (5), the method including

> a) initiating an operation involving receiving data via the network from a remotely located source (5A, 5B);
> b) determining an expected time for receipt of data from the said source (5A, 5B);
> c) scheduling for execution by the computer at or after the expected time a process forming part of the said operation and requiring the said data;
> d) pending receipt of the said data, executing other process on the computer;
> e) receiving the said data at the computer; and
> f) processing the said data.

2.   A method according to claim 1, including transmitting a poll message from the computer to the remotely located source (5A, 5B), and scheduling the said process relative to the time of transmission of the poll message.

3.   A method according to claim 2, including a step, prior to the transmission of the said poll message, of transmitting a call from the computer to the said remotely located source (5A, 5B) in use, the remotely located source (5A, 5B), in response to the said call, readying data for prompt transmission to the computer in response to the subsequent poll message.

4.   A method according to any one of the preceding claims, further comprising receiving at the computer an initial response transmitted by the remotely located source (5A, 5B) prior to the transmission of the said data, the said initial response including data availability timing data for use by the computer in scheduling the said process.

5.   A method according to claim 4, in which the initial response includes a parameter indicating the quantity of data which is subsequently to be received at the computer.

6.   A method according to any one of the preceding claims, including:

> i) transmitting a signal from the computer to the remotely located source (5A, 5B) on a looped signal path; and
> ii) returning a signal from the remotely located source to the computer in the time slot on the looped signal path occupied by the said signal in step (i).

7.   A method according to claim 6 when dependent on claim 5, in which in step (i) the computer transmits to the remotely located source a signal including a payload which is equal to or greater than the quantity indicated by the initial response parameter, and the remotely located source (5A, 5B) returns the said data in the time slot occupied by the said payload.

8. A method according to any one of the preceding claims including:

    measuring a round-trip propagation time between the computer and the remotely located source (5A, 5B), and using the measured round-trip propagation time in determining the expected time for receipt of data from the remotely located source (5A, 5B).

9. A method according to claim 8, in which the computer transmits a first signal to the remotely located source (5A, 5B) on a looped signal path, the remotely located source returns a second signal to the computer in the time slot originally occupied by the signal from the computer, and the computer determines the round-trip propagation time from the difference between the time of transmission of the first signal and the time of receipt of the second signal.

10. A method according to any one of the preceding claims in which the step of scheduling the process is carried out by an operating system running on the computer.

11. A computer comprising:

    a) a data processing system
    b) a network interface connected to the data processing system; and
    c) a scheduler connected to the data processing system and arranged to schedule the execution by the processing system of processes using data received from a remote data source via the network interface;
    d) a poll message generator connected to the scheduler and to the network interface, and arranged to generate a poll message for transmission via the network interface to the remote data source,

    and in which the scheduler is arranged to determine relative to the time of transmission of the poll message the expected time of arrival of data from the remote data source, the scheduler being arranged to schedule execution of other processes pending receipt of data from the remote data source.

12. A computer according to claim 11, in which the scheduler forms part of an operating system running on the data processing system.

**Patentansprüche**

1. Verfahren zum Betreiben eines Computers, der mit einem Netz (5) verbunden ist, wobei das Verfahren Folgendes einschließt:

    a) Initiieren eines Betriebs, der den Empfang von Daten über das Netz von einer entfernt befindlichen Quelle (5A, 5B) beinhaltet;
    b) Bestimmen einer erwarteten Zeit für den Empfang von Daten von der Quelle (5A, 5B);
    c) Disponieren eines Vorgangs, der einen Teil des Betriebs bildet und die Daten erfordert, zur Ausführung durch den Computer zu oder nach der erwarteten Zeit;
    d) während auf den Empfang der Daten gewartet wird, Ausführen eines anderen Vorgangs auf dem Computer;
    e) Empfangen der Daten an dem Computer; und
    f) Verarbeiten der Daten.

2. Verfahren nach Anspruch 1, das das Senden einer Pollmeldung von dem Computer an die entfernt befindliche Quelle (5A, 5B) und das Disponieren des Vorgangs im Verhältnis zu der Sendezeit der Pollmeldung einschließt.

3. Verfahren nach Anspruch 2, das einen Schritt vor dem Senden der Pollmeldung zum Übertragen eines Anrufs von dem Computer an die entfernt befindliche Quelle (5A, 5B) im Gebrauch einschließt, wobei die entfernt befindliche Quelle (5A, 5B) als Reaktion auf den Anruf Daten für eine sofortige Übertragung an den Computer als Reaktion auf die anschließende Pollmeldung bereitmacht.

4. Verfahren nach irgendeinem der vorhergehenden Ansprüche, weiterhin mit dem Empfang einer anfänglichen Antwort an dem Computer, die von der entfernt befindlichen Quelle (5A, 5B) vor der Übertragung der Daten gesendet wird, wobei die anfängliche Antwort Datenverfügbarkeits-Zeiteinstellungsdaten zur Verwendung durch den Computer beim Disponieren des Vorgangs beinhaltet.

5. Verfahren nach Anspruch 4, wobei die anfängliche Antwort einen Parameter einschließt, der die Menge an Daten angibt, die anschließend an dem Computer zu empfangen ist.

6. Verfahren nach irgendeinem der vorhergehenden Ansprüche, mit:

   i) Senden eines Signals von dem Computer an die entfernt befindliche Quelle (5A, 5B) auf einem zur Schleife geschalteten Signalpfad; und
   ii) Zurücksenden eines Signals von der entfernt befindlichen Quelle an den Computer in dem Zeitfenster auf dem zur Schleife geschalteten Signalpfad, das von dem Signal in Schritt (i) eingenommen wird.

7. Verfahren nach Anspruch 6, wenn er von Anspruch 5 abhängt, wobei der Computer in Schritt (i) an die entfernt befindliche Quelle ein Signal einschließlich einer Nutzlast sendet, die gleich der oder größer als die Menge ist, die von dem anfänglichen Antwortparameter angegeben wird, und die entfernt befindliche Quelle (5A, 5B) die Daten in dem Zeitfenster zurücksendet, das von der Nutzlast eingenommen wird.

8. Verfahren nach irgendeinem der vorhergehenden Ansprüche, mit:

   Messen einer Rundfahrt-Ausbreitungszeit zwischen dem Computer und der entfernt befindlichen Quelle (5A, 5B) und Verwenden der gemessenen Rundfahrt-Ausbreitungszeit beim Bestimmen der erwarteten Zeit für den Empfang von Daten von der entfernt befindlichen Quelle (5A, 5B).

9. Verfahren nach Anspruch 8, bei dem der Computer ein erstes Signal an die entfernt befindliche Quelle (5A, 5B) auf einem zur Schleife geschalteten Signalpfad sendet, die entfernt befindliche Quelle ein zweites Signal an den Computer in dem Zeitfenster zurücksendet, das ursprünglich von dem Signal von dem Computer eingenommen wird, und der Computer die Rundfahrt-Ausbreitungszeit aus der Differenz zwischen der Sendezeit des ersten Signals und der Empfangszeit des zweiten Signals bestimmt.

10. Verfahren nach irgendeinem der vorhergehenden Ansprüche, bei dem der Schritt des Disponierens des Vorgangs von einem Betriebssystem ausgeführt wird, das auf dem Computer läuft.

11. Computer mit:

   a) einem Datenverarbeitungssystem
   b) einer Netzwerkschnittstelle, die mit dem Datenverarbeitungssystem verbunden ist; und
   c) einem Disponenten, der mit dem Datenverarbeitungssystem verbunden und dazu angeordnet ist, die Ausführung von Vorgängen durch das Verarbeitungssystem unter Verwendung von Daten zu disponieren, die von einer entfernten Datenquelle über die Netzwerkschnittstelle empfangen werden;
   d) einem Pollmeldungs-Generator, der mit dem Disponenten und der Netzwerkschnittstelle verbunden und dazu angeordnet ist, eine Pollmeldung für eine Übertragung an die entfernte Datenquelle über die Netzwerkschnittstelle zu erzeugen,

   und wobei der Disponent dazu angeordnet ist, im Verhältnis zur Sendezeit der Pollmeldung die erwartete Ankunftszeit von Daten von der entfernten Datenquelle zu bestimmen, wobei der Disponent dazu angeordnet ist, die Ausführung anderer Vorgänge zu disponieren, während auf den Empfang der Daten von der entfernten Datenquelle gewartet wird.

12. Computer nach Anspruch 11, bei dem der Disponent einen Teil eines Betriebssystems bildet, das auf dem Datenverarbeitungssystem läuft.

## Revendications

1. Procédé pour exploiter un ordinateur connecté à un réseau (5), le procédé comprenant

   (a) l'initiation d'une opération comprenant la réception de données via le réseau depuis une source (5A, 5B) distante ;

(b) la détermination d'un temps attendu pour la réception de données depuis ladite source (5A, 5B) ;

(c) la planification d'une exécution par l'ordinateur, à ou après le temps attendu, d'un processus faisant partie de ladite opération et ayant besoin des dites données ;

(d) l'exécution d'un autre processus sur l'ordinateur en attendant la réception desdites données ;

(e) la réception desdites données par l'ordinateur ;

(f) le traitement desdites données.

2. Procédé selon la revendication 1, comprenant la transmission d'un message d'invitation depuis l'ordinateur vers la source (5A, 5B) distante, et la planification dudit processus par rapport au temps de transmission de l'invitation à émettre.

3. Procédé selon la revendication 2, comprenant une étape, avant la transmission dudit message d'invitation, de transmission d'un appel depuis l'ordinateur vers ladite source (5A, 5B) distante, en cours d'utilisation, la source (5A, 5B) distante, en réponse audit appel, préparant les données pour une transmission rapide à l'ordinateur en réponse au message d'invitation subséquent.

4. Procédé selon l'une quelconque des revendications précédentes, comprenant en outre la réception au niveau de l'ordinateur d'une réponse initiale transmise par la source (5A, 5B) distante avant la transmission desdites données, ladite réponse initiale comprenant des données de timing de disponibilité de données utilisées par l'ordinateur pour l'exécution dudit processus.

5. Procédé selon la revendication 4, dans lequel la réponse initiale comprend un paramètre qui indique la quantité de données qui est subséquemment reçue par l'ordinateur.

6. Procédé selon l'une quelconque des revendications précédentes, comprenant :

(i) la transmission d'un signal depuis l'ordinateur vers la source (5A, 5B) distante sur un chemin de signaux fonctionnant en boucle ; et

(ii) le renvoi d'un signal depuis la source distante vers l'ordinateur dans l'intervalle de temps sur le chemin de signaux fonctionnant en boucle occupé par ledit signal à l'étape (i).

7. Procédé selon la revendication 6 dépendante de la revendication 5, dans lequel, à l'étape (i), l'ordinateur transmet à la source distante un signal comprenant une charge utile qui est supérieure ou égale à la quantité indiquée par le paramètre de la réponse initiale, et la source (5A, 5B) distante renvoie lesdites données dans l'intervalle de temps occupé par ladite charge utile.

8. Procédé selon l'une quelconque des revendications précédentes, comprenant :

la mesure d'un temps de propagation aller-retour entre l'ordinateur et la source (5A, 5B) distante et l'utilisation du temps de propagation aller-retour mesuré pour déterminer le temps attendu pour la réception de données depuis ladite source (5A, 5B) distante.

9. Procédé selon la revendication 8, dans lequel l'ordinateur transmet un premier signal à la source (5A, 5B) distante sur le chemin de signaux fonctionnant en boucle, la source (5A, 5B) distante retournant un deuxième signal à l'ordinateur dans l'intervalle de temps occupé à l'origine par le signal de l'ordinateur, et l'ordinateur détermine le temps de propagation aller-retour à partir de la différence entre le temps de transmission du premier signal et le temps de réception du deuxième signal.

10. Procédé selon l'une quelconque des revendications précédentes, dans lequel l'étape de planification du processus est réalisée par un système d'exploitation exécuté sur l'ordinateur.

11. Un ordinateur comprenant :

(a) un système de traitement de données

(b) une interface réseau connectée au système de traitement de données

(c) un planificateur connecté au système de traitement de données et agencé pour planifier l'exécution par le système de traitement de processus qui utilisent des données reçues depuis une source de données distante via l'interface réseau

(d) un générateur de messages d'invitation connecté au planificateur et à l'interface réseau, et agencé pour générer un message d'invitation pour la transmission via l'interface réseau vers la source de données distante,

et dans lequel le planificateur est agencé pour déterminer, par rapport au temps de transmission du message d'invitation, le temps attendu d'arrivée des données de la source de données distante, le planificateur étant arrangé pour planifier l'exécution d'autres processus en attendant la réception des données de la source de données distante.

12. Ordinateur selon la revendication 11, dans lequel le planificateur fait parti d'un système d'exploitation exécuté sur le système de traitement des données.

Fig.1.

EP 1 016 252 B1

Fig.2.

Processor

Memory

I/O Coprocessor

Buffer

CALL

RETURN

Unscheduled
Resumption
of Process

Context
Switch

Buffer

EP 1 016 252 B1

# Fig.3.

Processor

Memory

I/O Coprocessor

Buffer

CALL

CONTRACT

POLL

RETURN

Scheduled
Resumption
of Process

# Fig.4.

Processor

Memory

I/O Coprocessor

Buffer

CALL

POLL

RETURN

Scheduled
Direct
Process
Memory
Resumption
Access

# Fig.5.

## Fig.6.

## Fig.7.

## Fig.8.

# Fig.9.

Fig.10.

# Fig.11.

Process Request → Long-Term Queue → Short-Term Queue → CPU → End

Non-Network I/O ← Non-Network I/O Queue

Non-Network I/O ← Non-Network I/O Queue

Non-Network I/O ← Non-Network I/O Queue

Non-Network I/O Queue

EP 1 016 252 B1

# Fig.12.

**User Mode** (121)

- Native App (123)
- App (124)
- App Subsystem (125)

**Kernel Mode** (122)

- I/O Manager (126a)
- Object Manager (126b)
- Process Manager (126c)
- Local Proc Call (126d)
- Virtual Memory (126e)
- GUI Manager (126f)

Microkernel (127)
- Dispatcher (1271)
- Database (1272)
- NET I/O

HAL (128)

EP 1 016 252 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 97307224 A
- GB 9702160 W
- WO 9705725 A
- WO 9602876 A
- GB 9400397 W
- WO 9533324 A
- WO 9532568 A

**Non-patent literature cited in the description**

- **Cotter, D. ; Lucek, J.K. ; Shabeer, M. ; Smith, K. ; Rogers, D.C. ; Nesset, D. ; Gunning, P.** Self-Routing of 100 Gbit/s Packets Using 6-Bit 'Keyword' Address Recognition. *Electronics Letters,* 1995, vol. 31, 2201-2202
- **E. Jahn et al.** Monolithically integrated asymmetric Mach-Zehnder interferometer as a robust add/drop multiplexer for OTDM systems. *Electronics Letters,* 1996, vol. 32, 216-217